# EUROPÄISCHE PATENTANMELDUNG

(11) **EP 4 708 575 A1**
(43) Veröffentlichungstag der Anmeldung: **11.03.2026**
(21) Anmeldenummer: 24198817.9
(22) Anmeldetag: 06.09.2024
(51) Int. Cl.: H01R 4/30, H01M 50/502, H01R 4/34, H01R 4/48, H01R 4/70, H01R 11/26

(54) **ELEKTRISCHER STECKVERBINDER UND ELEKTRISCHE STECKVERBINDUNG**

(71) Anmelder: Rosenberger Hochfrequenztechnik GmbH & Co. KG, 83413 Fridolfing (DE)
(72) Erfinder: Gruber, Andreas, 83413 Fridolfing (DE)
(74) Vertreter: Lorenz & Kollegen

(57) **Zusammenfassung**

Die vorliegende Erfindung betrifft einen elektrischen Steckverbinder. Die vorliegende Erfindung betrifft ferner eine elektrische Steckverbindung.

Ein elektrischer Steckverbinder (4) zum elektrischen und mechanischen Verbinden mit einem zugehörigen elektrischen Gegensteckverbinder (5) weist ein elektrisch isolierendes Gehäuse (9), eine Kontaktelementanordnung (15) und eine Schraube (6) zum Verschrauben mit einer Schraubenmutter (8) des Gegensteckverbinders (5) auf. In der Kontaktelementanordnung (15) ist eine Durchführung (16) ausgebildet, durch die ein Schraubenschaft (17) der Schraube (6) hindurchgeführt ist. Der Schraubenschaft (17) ist von einer Innenwand (18) der Durchführung (16) elektrisch isoliert angeordnet. Zwischen einem Schraubenkopf (23) der Schraube (6) und der Kontaktelementanordnung (15) ist ein elastisches Element (22) angeordnet, welches in einem nicht verschraubten Zustand der Schraube (6) und der Schraubenmutter (8) eine Auflagefläche (26) des Schraubenkopfes (23) von der Kontaktelementanordnung (15) beabstandet und in einem verschraubten Zustand der Schraube (6) und der Schraubenmutter (8) derart gestaucht ist, dass die Auflagefläche (26) mit der Kontaktelementanordnung (15) elektrisch und mechanisch verbunden ist.

## Beschreibung

### GEBIET DER ERFINDUNG

Die vorliegende Erfindung betrifft einen elektrischen Steckverbinder zum elektrischen und mechanischen Verbinden mit einem zugehörigen elektrischen Gegensteckverbinder. Der elektrische Steckverbinder weist ein elektrisch isolierendes Gehäuse, eine Kontaktelementanordnung und eine Schraube zum Verschrauben mit einer Schraubenmutter des Gegensteckverbinders auf. In der Kontaktelementanordnung ist eine Durchführung ausgebildet, durch die ein Schraubenschaft der Schraube hindurchgeführt ist.

Die vorliegende Erfindung betrifft auch eine elektrische Steckverbindung aus einem elektrischen Steckverbinder und einen zugehörigen elektrischen Gegensteckverbinder.

### TECHNISCHER HINTERGRUND

Bei der Übertragung von elektrischer Leistung und/oder von Datensignalen sind elektrische Steckverbinder in unterschiedlichsten Ausführungen im Einsatz. Zur Übertragung von elektrischer Leistung sind Steckverbindungen, so genannte Hochspannungs-, Hochstrom- oder Hochleistungssteckverbindungen, erforderlich, welche eine sichere elektrische und mechanische Kontaktierung zwischen dem Kontaktelement des Steckverbinders und dem Gegenkontaktelement des zugehörigen Gegensteckverbinders ermöglichen.

Eine Schraubverbindung, die das Kontaktelement und das zugehörige Gegenkontaktelement miteinander verklemmt, ist hierfür nach wie vor die bevorzugte Verbindungstechnik. Insbesondere in Batteriezellenmodulsteckverbindungen, welche Batteriezellenmodule in einer elektrischen Batterie eines Fahrzeugs untereinander oder mit einem elektrischen Antrieb oder einem Hybrid-Antrieb elektrisch miteinander verbinden, ist die Schraubverbindung die gängige Befestigungstechnik.

Insbesondere bei Batteriezellenmodulsteckverbindungen erfolgt oftmals aus Bauraumgründen die Schraubrichtung der Schraubverbindung in der Steckrichtung der Batteriezellenmodulsteckverbindung. Eine derartige konstruktive Struktur erfordert eine elektrische Kontaktierung zwischen dem Kontaktelement und dem zugehörigen Gegenkontaktelement über wenigstens eine zwischengeschaltete Kontakthülse.

Für eine elektrische Steckverbindung zur Übertragung einer hohen Leistung, insbesondere für eine Batteriezellenmodulsteckverbindung, ist andererseits ein Berührschutz erforderlich, der die elektrisch leitenden Komponenten der Steckverbindung vor einer Berührung durch den menschlichen Körper und durch ein elektrisch leitendes Werkzeug eines Monteurs schützt.

Das Verschrauben der Befestigungsschraube mit der Befestigungsschraubenmutter in der zur Steckrichtung gerichteten Schraubrichtung und das zusätzliche Vorhalten von wenigstens einer Kontakthülse zwischen dem Kontaktelement und dem Gegenkontaktelement erhöht die Komplexität des Berührschutzes erheblich:
Beispielsweise aus der EP 3 892 869 B1 geht ein Berührschutz für eine derartige Batteriezellenmodulsteckverbindung hervor. Der Berührschutz des Steckverbinders und des Gegensteckverbinders umfasst nicht nur das zugehörige elektrisch isolierende Gehäuse, sondern auch zusätzlich kragenförmige Berührschutzbereiche für die Kontakthülsen und Berührschutzbereiche für die Befestigungsschraube und für die Befestigungsmutter.

Dies ist ein Zustand, den es zu verbessern gilt.

### BESCHREIBUNG DER ERFINDUNG

Vor diesem Hintergrund liegt der vorliegenden Erfindung die Aufgabe zugrunde, einen elektrischen Steckverbinder anzugeben, in welchem zur vorzugsweisen Übertragung von elektrischer Leistung ein vereinfachter Berührschutz ausgebildet ist.

Es ist auch Aufgabe der Erfindung, eine elektrische Steckverbindung anzugeben, in welcher zur vorzugsweisen Übertragung von elektrischer Leistung ein vereinfachter Berührschutz ausgebildet ist.

Erfindungsgemäß wird diese Aufgabe durch einen elektrischen Steckverbinder mit den Merkmalen des Patentanspruchs 1 und durch eine elektrische Steckverbindung mit den Merkmalen des Patentanspruches 14 gelöst.

Demgemäß ist vorgesehen:
Ein elektrischer Steckverbinder zum elektrischen und mechanischen Verbinden mit einem zugehörigen elektrischen Gegensteckverbinder aufweisend
- ein elektrisch isolierendes Gehäuse,
- eine Kontaktelementanordnung und
- eine Schraube zum Verschrauben mit einer Schraubenmutter des Gegensteckverbinders,
- wobei in der Kontaktelementanordnung eine Durchführung ausgebildet ist,
- durch die ein Schraubenschaft der Schraube hindurchgeführt ist,
- wobei der Schraubenschaft von einer Innenwand der Durchführung elektrisch isoliert angeordnet ist,
- wobei zwischen einem Schraubenkopf der Schraube und der Kontaktelementanordnung ein elastisches Element angeordnet ist,
- welches in einem nicht verschraubten Zustand der Schraube und der Schraubenmutter eine Auflagefläche des Schraubenkopfes von der Kontaktelementanordnung beabstandet und
- in einem verschraubten Zustand der Schraube und der Schraubenmutter derart gestaucht ist, dass die Auflagefläche mit der Kontaktelementanordnung elektrisch und mechanisch verbunden ist.

Die der vorliegenden Erfindung zugrunde liegende Erkenntnis/Idee besteht darin, die durch einen Berührschutz zu schützenden Komponenten des Steckverbinders, nämlich die metallisch ausgebildete Kontaktelementanordnung und die ebenfalls metallisch ausgebildete Schraube, in einem elektrisch kritischen Zustand des Steckverbinders, in dem der Steckverbinder noch nicht mit dem Gegensteckverbinder verschraubt ist, voneinander elektrisch isoliert zu halten. In diesem elektrisch kritischen Zustand ist der vorzugsweise als ein Batteriezellenmodulsteckverbinder ausgebildete Hochstromsteckverbinder über ein elektrisches Verbindungselement und einen weiteren Batteriezellenmodulsteckverbinder mit einem Batteriezellenmodul einer elektrischen Batterie elektrisch verbunden und kann somit ein für den Menschen lebensgefährliches elektrisches Potential aufweisen.

Im elektrisch kritischen Zustand des Steckverbinders, der auch als ein Vormontagezustand bezeichnet werden kann, ist die Schraube durch eine in der Kontaktelementanordnung ausgebildete Durchführung hindurchgeführt und somit bereits in den Steckverbinder eingefügt.

Um eine für den Menschen gefährliche elektrische Verbindung zwischen der Kontaktelementanordnung und der Schraube zu verhindern, ist der Schraubenschaft der Schraube von der Innenwand der Durchführung der Kontaktelementanordnung elektrisch isoliert angeordnet und zwischen dem Schraubenkopf der Schraube und der Kontaktelementanordnung ein elastisches Element angeordnet, welches in einem nicht verschraubten Zustand der Schraube und der zum Gegensteckverbinder gehörigen Schraubenmutter eine Auflagefläche des Schraubenkopfes von der Kontaktelementanordnung beabstandet und somit elektrisch isoliert. Eine elektrische Isolierung der Auflagefläche des Schraubenschaftes scheidet aus, da diese alters- und/oder temperaturbedingt nicht formbeständig ist und somit eine eindeutige Klemmung der Kontaktelementanordnung des Steckverbinders mit der Gegenkontaktelementanordnung des Gegensteckverbinders nicht gesichert ist. Auf einen Berührschutz am axialen Steckende der Schraube, d. h. an der Spitze des Schraubenschaftes der Schraube, kann somit verzichtet werden und somit der Aufwand für den Berührschutz des Steckverbinders vorteilhaft reduziert werden.

Durch den Schraubvorgang wird die Federkraft des elastischen Elements überwunden, so dass im verschraubten Zustand der Schraube und der Schraubenmutter das elastische Element derart gestaucht ist, dass die Auflagefläche des Schraubenkopfes der Schraube mit der Kontaktelementanordnung elektrisch und mechanisch verbunden ist. Die elektrische und mechanische Verbindung der metallischen Auflagefläche des Schraubenkopfes und der Kontaktelementanordnung ermöglicht erst eine sichere Verklemmung zwischen der Kontaktelementanordnung des Steckverbinders und der zugehörigen Gegenkontaktelementanordnung bzw. dem zugehörigen Gegenkontaktelement des Gegensteckverbinders. Die elektrische und mechanische Verbindung der metallischen Auflagefläche des Schraubenkopfes und der Kontaktelementanordnung kann unmittelbar oder mittelbar erfolgen. In der mittelbaren elektrischen und mechanischen Verbindung kann zwischen der metallischen Auflagefläche des Schraubenkopfes und der Kontaktelementanordnung das metallisch ausgebildete elastische Element und/oder ein noch zu erläuterndes metallisches Zwischenelement angeordnet sein.

Der Steckverbinder ist vorzugsweise als ein gewinkelter Steckverbinder ausgebildet, da die Steckschnittstelle des Steckverbinders in einem von 0° verschiedenen Winkel, vorzugsweise in einem Winkel von 90°, zur Verbindungsschnittstelle des Steckverbinders, d. h. zur Schnittstelle, in der ein elektrisches Verbindungselement, beispielsweise ein elektrisches Kabel oder eine Stromschiene, vom Steckverbinder abgeht oder am Steckverbinder ankommt, orientiert ist.

Neben einem Steckverbinder, der an ein elektrisches Kabel oder an eine Stromschiene angebunden ist, kann der Steckverbinder verbindungsseitig alternativ auch als ein Leiterplattensteckverbinder mit einer Leiterplatte oder als ein Adaptersteckverbinder mit einem weiteren Gegensteckverbinder verbunden sein.

Da der Steckverbinder mit einem Berührschutz ausgebildet ist, ist der Steckverbinder vorzugsweise zur Übertragung einer elektrischen Spannung ausgebildet, bei der eine Berührung von elektrisch leitenden Komponenten des Steckverbinders zu einer lebensgefährdenden Situation für den Monteur führen kann. Für eine elektrische Gleichspannung von mindestens 120 V und für eine elektrische Wechselspannung von mindestens 50 V ist nach DIN VDE 0100-410 ein Berührschutz für elektrische Komponenten, Geräte, Systeme und Anlagen erforderlich. Somit ist der Steckverbinder hierbei und im Folgenden auch ein Hochspannungs-, Hochstrom- oder Hochleistungssteckverbinder, welcher jeweils eine elektrische Leistung überträgt, welche wenigstens den in der DIN VDE 0100-410 genannten Mindestspannungen entspricht.

Das Gehäuse des Steckverbinders, in dem alle Komponenten, insbesondere alle elektrisch leitenden Komponenten, des Steckverbinders angeordnet und vor Berührung von außen umschlossen bzw. umhüllt sind, ist elektrisch isolierend ausgebildet. Das Gehäuse des Steckverbinders weist vorzugsweise eine steckseitige Gehäuseöffnung zum Stecken mit dem Gegensteckverbinder, eine verbindungsseitige Gehäuseöffnung zur Hindurchführung von wenigstens einem Kontaktelement oder einem elektrischen Verbindungselement oder zum Stecken eines weiteren Gegensteckverbinders auf. Schließlich weist das Gehäuse des Steckverbinders vorzugsweise eine seitliche Gehäuseöffnung zum Einführen einer Schraube auf. Das Gehäuse des Steckverbinders kann einteilig oder mehrteilig, vorzugsweise zweitteilig, ausgeführt sein.

Die Kontaktelementanordnung des Steckverbinders kann in einer minimalistischen und nicht vorzugsweisen Ausführung ein einziges Kontaktelement aufweisen, welches in einem Verbindungsbereich mit einem elektrischen Verbindungselement, vorzugsweise einem elektrischen Kabel oder einer Stromschiene, elektrisch und mechanisch verbindbar ist. Im einzigen Kontaktelement kann sich an den Verbindungsbereich unmittelbar oder mittelbar ein Kontaktierungsbereich anschließen, welcher mit einer Gegenkontaktelementanordnung oder einem Gegenkontaktelement eines Gegensteckverbinders elektrisch und mechanisch kontaktierbar sein kann. Das Kontaktelement ist vorzugsweise als ein Kontaktelement mit einer planaren Kontaktierungsfläche ausgeformt. Aufgrund der gewinkelten Ausführung des Steckverbinders ist die planare Kontaktierungsfläche des Kontaktelements an einer seitlichen Mantelfläche des Kontaktelements ausgebildet.

In einer vorzugsweisen Ausprägung weist die Kontaktelementanordnung ein weiteres Kontaktelement auf, welches vorzugsweise hülsenförmig ausgebildet ist und eine planare Kontaktierungsfläche an einer seitlichen Mantelfläche des Kontaktelements elektrisch und mechanisch kontaktiert. Die seitliche Mantelfläche des vorzugsweise als ein Flachkontaktelement ausgebildeten Kontaktelements, welche das vorzugsweise hülsenförmig ausgebildete weitere Kontaktelement elektrisch und mechanisch kontaktiert, ist hierbei in Richtung des Gegensteckverbinders gerichtet.

Die Durchführung der Kontaktelementanordnung, durch die der Schraubenschaft der Schraube hindurchgeführt ist, setzt sich aus der Durchführung des Kontaktelements und der Durchführung des weiteren Kontaktelements zusammen. Die Durchführung des hülsenförmigen weiteren Kontaktelements kann vorzugsweise mit der Durchführung des flachen Kontaktelements fluchten. Auf diese Weise lässt sich die Schraube durch die Durchführung des vorzugsweise flach ausgebildeten Kontaktelements und durch die Durchführung des vorzugsweise hülsenförmig ausgebildeten weiteren Kontaktelements hindurchführen, um eine Verschraubung mit einer im Gegensteckverbinder angeordneten Schraubenmutter zu ermöglichen.

Das Kontaktelement und das weitere Kontaktelement des Steckverbinders können in einer vorzugsweisen Ausprägung der Kontaktelementanordnung erst im verschraubten Zustand der Schraubverbindung zwischen der Schraube und der Schraubenmutter miteinander verklemmt sein und sich somit elektrisch und mechanisch gegenseitig kontaktieren, während im nicht verschraubten Zustand der Schraubverbindung nicht zwingend eine elektrische und mechanische Kontaktierung zwischen dem Kontaktelement und dem weiteren Kontaktelement vorliegen muss. In einer weiteren Ausprägung der Kontaktelementanordnung können das Kontaktelement und das weitere Kontaktelement ständig über eine vorzugsweise stoffschlüssige Verbindung miteinander elektrisch und mechanisch verbunden sein.

Ein als ein Batteriezellenmodulsteckverbinder ausgebildeter Steckverbinder enthält vorzugsweise eine einzige Kontaktelementanordnung, um über eine elektrische Steckverbindung mit einem zugehörigen Gegensteckverbinder eines ersten Batteriezellenmoduls eine steck- und wieder lösbare elektrische Verbindung zwischen dem ersten Batteriezellenmodul und einem zweiten Batteriezellenmodul zu verwirklichen. Eine steck- und wieder lösbare elektrische Verbindung zwischen dem ersten Batteriezellenmodul und einem dritten Batteriezellenmodul erfolgt typischerweise über eine zweite elektrische Steckverbindung zwischen einem zweiten Steckverbinder und einem zugehörigen zweiten Gegensteckverbinder des ersten Batteriezellenmoduls.

Im Fall eines als ein Hochspannungs-, ein Hochstrom- oder ein Hochleistungssteckverbinder ausgebildeten Steckverbinders, welcher eine steck- und wieder lösbare elektrische Verbindung zwischen verschiedenen elektrischen Aggregaten eines elektrischen Fahrzeugs oder eines Hybrid-Fahrzeuges (beispielsweise Elektromotor, elektrische Batterie, elektrische Strom- und/oder Spannungswandler usw.) realisiert, können im Steckverbinder vorzugsweise zwei oder drei Kontaktelementanordnungen angeordnet sein, welche mit jeweils einer korrespondierenden Gegenkontaktelementanordnung des zugehörigen Gegensteckverbinders kontaktierbar sind. Während mit zwei Kontaktelementanordnungen bekanntlich ein Gleichstrom im Vorwärts- und Rückwärtspfad oder alternativ ein einphasiger Wechselstrom übertragbar ist, ist mit drei Kontaktelementanordnungen ein dreiphasiger Wechselstrom übertragbar. Jede Kontaktelementanordnung ist jeweils durch eine zugehörige Schraubverbindung mit einer zugehörigen Gegenkontaktelementanordnung mechanisch und elektrisch verbindbar. Die einzelnen Kontaktelementanordnungen und die zugehörigen Schrauben sind im Steckverbinder jeweils elektrisch isoliert voneinander angeordnet.

Die Befestigung des Steckverbinders mit dem zugehörigen Gegensteckverbinder erfolgt über eine Schraubverbindung zwischen einer metallisch ausgebildeten Schraube des Steckverbinders und einer zugehörigen metallisch ausgebildeten Schraubenmutter des Gegensteckverbinders, um eine mechanisch stabile Klemmung, insbesondere eine mechanisch langzeitstabile Klemmung, der Kontaktelementanordnung des Steckverbinders mit der Gegenkontaktelementanordnung bzw. dem Gegenkontaktelement des zugehörigen Gegensteckverbinders zu erzielen. Die Schraubrichtung der Schraubverbindung entspricht vorzugsweise der Steckrichtung des gewinkelt ausgebildeten Steckverbinders mit dem zugehörigen Gegensteckverbinder. Zur Realisierung der Schraubverbindung kann der Schraubenschaft der Schraube durch eine in der Kontaktelementanordnung ausgebildete Durchführung hindurchgeführt sein, deren Längsachse vorzugsweise in der Steckrichtung des Steckverbinders gerichtet ist. Der Schraubenkopf der Schraube ist im Hinblick auf eine funktionierende Klemmung der Kontaktelementanordnung des Steckverbinders mit der Gegenkontaktelementanordnung bzw. dem Gegenkontaktelement des zugehörigen Gegensteckverbinders an einer dem Gegensteckverbinder abgewandten Seite der Kontaktelementanordnung angeordnet. Die Schraube ist konsequenterweise durch eine Seitenöffnung des Gehäuses in den Steckverbinder einführbar, welche an einer dem Gegensteckverbinder abgewandten Seite des Gehäuses ausgebildet ist.

In einer vorzugsweisen Ausbildung einer Schraubverbindung kann die Schraube einen Schraubenschaft mit einem Außengewinde aufweisen, das mit dem Innengwinde der Schraubenmutter verschraubbar ist. Die mit einem Werkzeug zu verschraubende Schraubkomponente, d. h. die zu rotierende Schraubkomponente, der Schraubverbindung ist hierbei die Schraube, welche hierzu am Schraubenkopf eine mechanische Schnittstelle für das Werkzeug, d. h. eine zur Außen- oder Innenkontur des Werkzeugs korrespondierende Innen- oder Außenkontur, aufweist.

Der durch die Durchführung der Kontaktelementanordnung hindurchgeführte Schraubenschaft ist von der Innenwand der Durchführung vorzugsweise elektrisch isoliert angeordnet, um die vorzugsweise metallisch ausgebildete Schraube von einem lebensgefährdenden elektrischen Potential zu isolieren, welche u.U. auf der metallisch ausgebildeten Kontaktelementanordnung anliegt. Hierzu kann die Quererstreckung des Schraubenschaftes vollumfänglich kleiner als die Querstreckung der Durchführung ausgebildet sein. Außerdem kann der Schraubenschaft von der Innenwand der Durchführung der Kontaktelementanordnung vollumfänglich beabstandet angeordnet sein. Im Sonderfall einer Durchführung mit einer runden Quererstreckung kann die Längsachse des Schraubenschaftes auf der Längsachse der Durchführung zu liegen kommen. Durch die vollumfängliche Beabstandung des Schraubenschaftes von der Innenwand der Durchführung kann zwischen dem Schraubenschaft und der Innenwand der Durchführung Luft und/oder ein anderes elektrisch isolierendes Material in einem festen Aggregatszustand angeordnet sein.

Das elastische Element ist insbesondere in der Schraubrichtung zwischen dem Schraubenkopf und der Kontaktelementanordnung angeordnet. Somit ist das elastische Element im nicht verschraubten Zustand der Schraubverbindung zwischen der Schraube und der zugehörigen Schraubenmutter in der Schraubrichtung nicht elastisch gestaucht, so dass das elastische Element den Schraubenkopf, insbesondere die Auflagefläche des Schraubenkopfes, von der Kontaktelementanordnung in der Schraubrichtung beabstandet. Somit ist auch der Schraubenkopf der Schraube und insbesondere die metallisch ausgebildete Auflagefläche des Schraubenkopfes der Schraube von der Kontaktelementanordnung elektrisch isolierend beabstandet. Erst im verschraubten Zustand der Schraubverbindung zwischen der Schraube und der zugehörigen Schraubenmutter ist das elastische Element derart in der Schraubrichtung gestaucht, dass die metallisch ausgebildete Auflagefläche des Schraubenkopfes die metallisch ausgebildete Kontaktelementanordnung mechanisch kontaktiert und somit eine mechanisch stabile Verklemmung der Kontaktelementanordnung mit der zugehörigen Gegenkontaktelementanordnung bzw. dem zugehörigen Gegenkontaktelement realisiert ist. Im verschraubten Zustand der Schraubverbindung befindet sich die Schraubverbindung aus der Schraube und der zugehörigen Schraubenmutter auf demselben elektrischen Potential wie die Kontaktelementanordnung und die zugehörige Gegenkontaktelementanordnung bzw. das zugehörige Gegenkontaktelement. Das elektrisch isolierende Gehäuse des Steckverbinders und ein ebenfalls elektrisch isolierend ausgebildetes Gehäuse des Gegensteckverbinders, die den Berührschutz der Steckverbindung bilden, verdecken aber im verschraubten Zustand der Schraubverbindung sämtliche elektrisch leitenden Komponenten des Steckverbinders und des Gegensteckverbinders vollständig, so dass eine Lebensgefahr für einen Menschen nicht mehr besteht.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

In einer vorzugsweisen Ausprägung der Erfindung kann zwischen dem Schraubenschaft der Schraube und der Innenwand der Durchführung ein elektrisch isolierendes Element angeordnet sein, welches vorzugsweise hülsenförmig ausgebildet ist. Somit ist die Schraube zusätzlich im Bereich des Schraubenschaftes von der Kontaktelementanordnung elektrisch isoliert. Die elektrische Isolierung zwischen der Schraube und der Kontaktelementanordnung mittels des elektrisch isolierenden Elements wirkt nicht nur im eingefügten Zustand der Schraube, d. h. im Vormontagezustand des Steckverbinders bzw. im nicht verschraubten Zustand der Schraubverbindung, sondern im final montierten Zustand des Steckverbinders bzw. der Steckverbindung, d. h. im verschraubten Zustand der Schraubverbindung. Das elektrisch isolierende Element kann am Schraubenschaft und/oder an der Kontaktelementanordnung befestigt sein. Vorzugsweise kann die Befestigung über eine formschlüssige Verbindung, beispielsweise eine Rastverbindung, erfolgen. Alternativ ist aber auch eine kraftschlüssige Verbindung oder eine stoffschlüssige Verbindung denkbar: beispielsweise kann eine Realisierung des elektrisch isolierenden Elements eine elektrisch isolierende Beschichtung am Schraubenschaft der Schraube und/oder an der Innenwand der Durchführung der Kontaktelementanordnung sein. Im Fall eines an der Innenwand der Durchführung fixierten elektrisch isolierenden Elements ist zusätzlich auch eine elektrische Isolierung zwischen der Schraube und der Kontaktelementanordnung im Fügeprozess der Schraube verwirklicht.

In einer weiteren vorzugsweisen Ausprägung der Erfindung kann das elastische Element als eine Feder ausgebildet sein, welche den Schraubenschaft wenigstens in einem Winkelsegment, vorzugsweise vollumfänglich, umgibt. Die Feder kann bevorzugt als eine Spiralfeder oder als eine Wellfeder verwirklicht sein. Um eine ausreichende Federkraft zu verwirklichen, kann die Feder vorzugsweise metallisch ausgebildet sein. Die Feder kann bevorzugt derart ausgeformt sein, dass durch Stauchen der Feder eine Federkraft in der Feder aufgebaut wird, die in Schraubrichtung rotationsymmetrisch zur Längsachse des Schraubenschaftes wirkt.

In einer besonders vorzugsweisen Ausprägung der Erfindung kann die Feder mehrere aufeinander gestapelte Einzelfedern aufweisen. Die aufeinander gestapelten Einzelfedern können bevorzugt an den axialen Enden jeweils aneinander fixiert sein. Auf diese Weise lässt sich eine Feder mit einer vergrößerten Federhärte realisieren, die sich unter Einwirken einer normalen Betätigungskraft eines Monteurs im nicht verschraubten Zustand der Schraubverbindung nicht derart weit stauchen lässt, dass die Auflagefläche des Schraubenkopfs die Kontaktelementanordnung elektrisch und mechanisch kontaktiert. Ein elektrischer Unfall eines Monteurs durch eine unsachgemäße Betätigung der Schraube im nicht verschraubten Zustand der Schraubverbindung lässt sich somit vermeiden.

Die vorzugsweise aus gestapelten Einzelfedern zusammengesetzte Feder kann bevorzugt hülsenförmig ausgebildet sein. Im Mantel der hülsenförmigen Ausbildung der vorzugsweise aus gestapelten Einzelfedern zusammengesetzten Feder können zur Verwirklichung der Elastizität mehrere durch jeweils eine Strebe voneinander getrennte Durchführungen ausgebildet sein, welche beispielsweise wabenförmig, quaderförmig, trapezförmig, polygonförmig, elliptisch und/oder rund ausgeformt sein können. Alternativ zu den Durchführungen können auch entsprechend geformte Ausnehmungen an der Innen- oder Außenmantelfläche der Feder realisiert sein.

In einer vorzugsweisen Weiterbildung der Erfindung kann der Schraubenkopf einen metallischen Grundkörper und eine elektrisch isolierende Umhüllung aufweisen, welche den metallischen Grundkörper außer in der Auflagefläche umgibt. Auf diese Weise weist der Schraubenkopf der Schraube an all den Flächen einen Berührschutz auf, welche aus dem Gehäuse des Steckverbinders herausragen und somit durch den Monteur berührbar sein können. Bei der elektrisch isolierenden Umhüllung kann es sich um eine elektrisch isolierende Beschichtung auf dem metallischen Grundkörper handeln. Alternativ ist als eine elektrisch isolierende Umhüllung auch eine elektrisch isolierende Kappe denkbar, die auf den metallischen Grundkörper des Schraubenkopfes kraftschlüssig aufsetzbar ist.

Das elastische Element, insbesondere die Feder, kann sich hierbei vorzugsweise an der elektrisch isolierenden Umhüllung, vorzugsweise einzig an der elektrisch isolierenden Umhüllung, abstützen. Auf diese Weise ist vorteilhaft keine elektrische Verbindung zwischen der metallischen Kontaktelementanordnung über das vorzugsweise metallisch ausgebildete elastische Element bzw. die vorzugsweise metallisch ausgebildete Feder zur metallischen Schraube ausgebildet. Alternativ lässt sich die elektrische Isolierung zwischen dem Schraubenkopf und dem Kontaktelement auch durch ein Abstützen des elastischen Elements zwischen der metallischen Auflagefläche des Schraubenkopfes und einer elektrisch isolierenden Abdeckung des Kontaktelements verwirklichen. Die elektrisch isolierende Abdeckung des Kontaktelements kann ein Bereich des Gehäuses des Steckverbinders sein, der sich über die Auflagefläche des elastischen Elements auf dem Kontaktelement erstreckt oder alternativ ein zwischen dem elastischen Element und dem Kontaktelement angeordnetes elektrisch isolierendes Zwischenelement sein.

Zwischen dem elastischen Element und der Kontaktelementanordnung kann in einer vorzugsweisen Erweiterung der Erfindung ein metallisches Zwischenelement angeordnet sein, an dem sich der Schraubenkopf der Schraube im verschraubten Zustand der Schraubverbindung abstützt. Das metallische Zwischenelement, das vorzugsweise als eine metallische Scheibe ausgeführt sein kann, kann die Abstützfläche an der Kontaktelementanordnung für den Schraubenkopf vergrößern. Dies kann insbesondere bei einer Durchführung in der Kontaktelementanordnung vorteilhaft sein, deren maximale Querstreckung wenigstens der maximalen Quererstreckung der Auflagefläche des Schraubenkopfes entspricht. Ist die Durchführung der Kontaktelementanordnung als eine Langlochbohrung verwirklicht, um einen variierenden Abstand zwischen benachbarten Batteriezellmodulen durch die elektrische Verbindung zwischen benachbarten Batteriezellmodulen auszugleichen, so kann ein derartiges metallisches Zwischenelement eine Abstützung der Auflagefläche des Schraubenkopfes auf der Kontaktelementanordnung erst ermöglichen. Die metallische Ausbildung des Zwischenelements kann eine mechanisch besonders stabile Klemmung, insbesondere eine mechanisch langzeitstabile Klemmung, der Kontaktelementanordnung des Steckverbinders mit der zugehörigen Gegenkontaktelementanordnung bzw. dem zugehörigen Gegenkontaktelement des Gegensteckverbinders durch die Schraubverbindung ermöglichen.

Die bereits obig erwähnte Seitenöffnung des Gehäuses, die sich im Gehäuse des Steckverbinders in einer Längsachsrichtung der Durchführung der Kontaktelementanordnung erstreckt und dem Gegensteckverbinder abgewandt ausgebildet ist und zum Einfügen der Schraube in den Steckverbinder dient, kann vorzugsweise domförmig ausgeformt sein. Unter domförmiger Ausbildung der Seitenöffnung wird hierbei und im Folgenden eine Seitenöffnung verstanden, deren Längserstreckung einem Vielfachen der Wandstärke des Gehäuses entspricht und somit röhrenförmig aus den angrenzenden Bereichen des Gehäuses hervorragt. Die domförmige Ausbildung der Seitenöffnung kann hierbei vorzugsweise in den Außenbereich des Gehäuses hervorragen. Durch eine derartige domförmige Ausbildung der Seitenöffnung lässt sich die Schraube während des Einfügeprozesses in den Steckverbinder vorzugsweise mittels des Schraubenkopfes an der Innenwand der Seitenöffnung in der Längsachsrichtung der Durchführung der Kontaktelementanordnung führen. Zur Optimierung der Führung der Schraube kann ein Innendurchmesser der domförmigen Seitenöffnung im Wesentlichen einem Außendurchmesser des Schraubenkopfes entsprechen. Sofern die Durchführung der Kontaktelementanordnung wie der Schraubenschaft der Schraube jeweils eine runde Quererstreckung aufweist, lässt sich die Schraube durch die Führung an der domförmig ausgebildeten Seitenöffnung im Einfügeprozess insbesondere konzentrisch zur Durchführung der Kontaktelementanordnung führen.

In einer weiteren vorzugsweisen Ausbildung der Erfindung kann in der domförmig ausgeformten Seitenöffnung ein Anschlagmittel ausgebildet sein, um die Schraube im vormontierten Zustand der Steckverbindung verliersicher am Steckverbinder zu befestigen. Das Anschlagmittel kann beispielsweise ein in wenigstens einem Winkelsegment der Innenwand der domförmig ausgebildeten Seitenöffnung jeweils ausgeformter Steg sein, der in einem vormontierten Zustand des Steckverbinders die in den Steckverbinder eingefügte Schraube vor dem Herausfallen schützt. Alternativ zu einem Anschlagmittel in der domförmig ausgeformten Seitenöffnung kann auch ein Abdeckmittel Verwendung finden, das die domförmige Seitenöffnung des Gehäuses zumindest teilweise abdeckt und ein Herausfallen der Schraube verhindert. Das Abdeckmittel kann kappenförmig ausgebildet sein und kraft- und/oder formschlüssig mittels beispielsweise einer Schraub- oder Rastverbindung mit der domförmig ausgeformten Seitenöffnung verbunden sein. Schließlich kann als eine weitere Variante zur verliersicheren Befestigung der Schraube am Steckverbinder am Schraubenschaft der Schraube eine stufen- oder stegförmige Ausformung ausgebildet sein, die mit einem innenseitigen Steg des elektrisch isolierenden Elements zusammenwirkt und somit ein Herausfallen der Schraube aus dem Steckverbinder verhindert.

In einer ersten vorzugsweisen Ausführungsform der Erfindung kann zwischen einem Schraubenkopf der Schraube und einem Kontaktelement der Kontaktelementanordnung das elastische Element angeordnet sein. Das Kontaktelement kann eingerichtet sein, unmittelbar mit einem elektrischen Verbindungselement außerhalb einer Steckschnittstelle des Steckverbinders elektrisch und mechanisch verbindbar zu sein.

Bei dem Kontaktelement kann es sich hierbei um ein Kontaktelement handeln, das in einem Verbindungsbereich vorzugsweise stoffschlüssig mit den Litzen eines als ein elektrisches Verbindungselement ausgebildeten elektrischen Kabels oder mit einer als ein elektrisches Verbindungselement ausgebildeten Stromschiene elektrisch und mechanisch verbunden sein kann. Der Stoffschluss kann vorzugsweise mittels eines gängigen Schweißverfahrens wie beispielsweise Laserschweißen, Rührreibschweißen, Ultraschallschweißen oder Widerstandsschweißen erfolgen. Alternativ kann auch eine formschlüssige Verbindung mittels beispielsweise Crimpen der Litzen des als ein elektrisches Verbindungselement ausgebildeten elektrischen Kabels mit einem als eine Crimphülse ausgebildeten Verbindungsbereichs des Kontaktelements verwirklicht sein.

Im nicht verschraubten Zustand der Schraubverbindung kann die Auflagefläche des Schraubenkopfes vom Kontaktelement durch das dazwischen angeordnete und nicht gestauchte elastische Element beabstandet sein. Im verschraubten Zustand der Schraubverbindung kann die Auflagefläche des Schraubenkopfes das Kontaktelement aufgrund des gestauchten und dazwischen angeordneten elastischen Elements unmittelbar oder mittelbar kontaktieren.

Das Kontaktelement der zum Steckverbinder gehörigen Kontaktelementanordnung kann in einem verschraubten Zustand der Schraubverbindung vorzugsweise einen Kontaktbereich eines Gegenkontaktelements des zugehörigen Gegensteckverbinders elektrisch und mechanisch kontaktieren. Alternativ kann die Kontaktelementanordnung ein weiteres Kontaktelement, vorzugsweise ein hülsenförmiges Kontaktelement, aufweisen, das vorzugsweise stoffschlüssig mit dem Kontaktelement mit einer planaren Kontaktierungsfläche elektrisch und mechanisch verbunden sein kann. Das weitere Kontaktelement kann in einem verschraubten Zustand der Schraubverbindung ein Gegenkontaktelement des zugehörigen Gegensteckverbinders elektrisch und mechanisch kontaktieren.

In einer zweiten vorzugsweisen Ausführungsform der Erfindung kann die Kontaktelementanordnung ein Kontaktelement mit einer planaren Kontaktierungsfläche und ein weiteres Kontaktelement aufweisen, das vorzugsweise hülsenförmig ausgebildet sein kann. Der Schraubenschaft der Schraube ist hierbei zusätzlich durch eine Durchführung des weiteren Kontaktelements hindurchgeführt. In der zweiten vorzugsweisen Ausführungsform der Erfindung können das Kontaktelement und das weitere Kontaktelement der Kontaktelementanordnung im nicht verschraubten Zustand der Schraubverbindung nicht elektrisch und mechanisch, insbesondere nicht stoffschlüssig, miteinander verbunden sein. Erst im verschraubten Zustand der Schraubverbindung können sich das Kontaktelement und das weitere Kontaktelement der Kontaktelementanordnung elektrisch und mechanisch kontaktieren. Im verschraubten Zustand der Schraubverbindung kann das weitere Kontaktelement des Steckverbinders - durch die Verklemmung der Kontaktelementanordnung des Steckverbinders und der zugehörigen Gegenkontaktelementanordnung bzw. dem zugehörigen Gegenkontaktelement des Gegensteckverbinders - die Gegenkontaktelementanordnung bzw. das Gegenkontaktelement des Gegensteckverbinders kontaktieren. Im verschraubten Zustand der Schraubverbindung können das Gehäuse des Steckverbinders und des Gegensteckverbinders sämtliche elektrisch leitenden Komponenten des Steckverbinders bzw. des Gegensteckverbinders verdecken, so dass eine lebensgefährdende Berührung der elektrisch leitenden Komponenten ausgeschlossen ist. Das weitere Kontaktelement des Streckverbinders kann also jeweils im verschraubten Zustand der Schraubverbindung mit dem Kontaktelement des Steckverbinders elektrisch und mechanisch kontaktierbar sein und kann eingerichtet sein, mit einer Gegenkontaktelementanordnung bzw. einem Gegenkontaktelement des Gegensteckverbinders elektrisch und mechanisch verbindbar zu sein.

In der zweiten vorzugsweisen Ausführungsform der Erfindung kann der Steckverbinder ein weiteres elastisches Element aufweisen, das zwischen dem Schraubenkopf der Schraube und dem weiteren Kontaktelement der Kontaktelementanordnung angeordnet sein kann. Das weitere elastische Element kann vorzugsweise als eine weitere Feder ausgebildet sein und kann die obig zum elastischen Element bzw. zur Feder jeweils bereits erwähnten technischen Ausprägungsmerkmale äquivalent aufweisen. In einem nicht verschraubten Zustand der Schraubverbindung wird durch das weitere elastische Element bzw. die weitere Feder das weitere Kontaktelement vom Kontaktelement beabstandet gehalten. Das Kontaktelement, das im vormontierten Zustand des Steckverbinders über ein elektrisches Verbindungselement unter Umständen mit einem unter einem elektrischen Potential stehenden Aggregat, beispielsweise einem weiteren Batteriezellenmodul, verbunden ist, kann somit dieses elektrische Potential nicht auf das weitere Kontaktelement der Kontaktelementanordnung übertragen. Da das weitere Kontaktelement im vormontierten Zustand des Steckverbinders, d. h. in einem nicht verschraubten Zustand der Schraubverbindung, von einem Monteur berührbar sein kann, ist diese elektrische Trennung für die Unversehrtheit des Monteurs zwingend notwendig.

Das elastische Element und das weitere elastische Element können in einer weiteren vorzugsweisen Ausprägung auch einteilig miteinander ausgebildet sein. Das einteilige elastische Element bzw. die einteilige Feder kann demnach zwei elastische Bereiche bzw. zwei Federbereiche aufweisen. Das elektrisch isolierende Element zur elektrisch isolierenden Beabstandung des Schraubenschaftes der Schraube von der Innenwand der Durchführung der Kontaktelementanordnung kann alternativ oder ergänzend zur Befestigung am Kontaktelement auch am weiteren Kontaktelement befestigt sein.

Wie bereits erwähnt kann der Steckverbinder vorzugsweise als ein Hochstrom-, Hochspannungs- oder Hochleistungssteckverbinder ausgebildet sein, in welchem ein Berührschutz für alle elektrisch leitenden Komponenten des Steckverbinders vorgesehen ist. In einer besonders vorzugsweisen Ausprägung kann der Steckverbinder wie ebenfalls schon erwähnt als ein Batteriezellenmodulsteckverbinder zum elektrischen und mechanischen Verbinden mit einem Batteriezellenmodulgegensteckverbinder eines Batteriezellenmoduls einer elektrischen Batterie ausgebildet sein.

Die Erfindung betrifft ferner eine elektrische Steckverbindung aufweisend einen elektrischen Steckverbinder und den zugehörigen elektrischen Gegensteckverbinder.

Die bisher und im Folgenden zum elektrischen Steckverbinder erwähnten technischen Merkmale, technischen Wirkungen und technischen Vorteile gelten äquivalent bei der elektrischen Steckverbindung.

Der Gegensteckverbinder weist vorzugsweise eine Gegenkontaktelementanordnung aus wenigstens einem Gegenkontaktelement auf, das vorzugsweise eine planare Gegenkontaktierungsfläche aufweisen kann. Das Gegenkontaktelement kann eine Gegenkontaktierungsfläche zur Kontaktierung der Kontaktelementanordnung des Steckverbinders und einen Verbindungsbereich zum elektrischen und mechanischen Verbinden mit einem weiteren elektrischen Verbindungselement, beispielsweise einem weiteren elektrischen Kabel oder einer weiteren Stromschiene, aufweisen. Der Verbindungsbereich des Gegenkontaktelements kann alternativ auch direkt mit einem elektrischen Aggregat, beispielsweise mit einem Batteriezellenmodul, elektrisch und mechanisch verbunden sein.

Zusätzlich kann die Gegenkontaktelementanordnung ein weiteres Gegenkontaktelement aufweisen, das vorzugsweise hülsenförmig ausgebildet ist, und mit dem Gegenkontaktelement des Gegensteckverbinders elektrisch und mechanisch verbunden sein kann und mit der Kontaktelementanordnung des Steckverbinders elektrisch und mechanisch verbindbar sein kann. Wie bereits erwähnt weist der Gegensteckverbinder eine Schraubenmutter zum Verschrauben mit der Schraube des Steckverbinders und ein elektrisch isolierendes Gehäuse zum Umhüllen sämtlicher elektrisch leitender Komponenten des Gegensteckverbinders auf.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine isometrische Darstellung einer elektrischen Verbindung zwischen zwei Batteriezellmodulen über zwei erfindungsgemäße elektrische Steckverbindungen und ein dazwischen geschaltetes elektrisches Verbindungselement,
- Fig. 2A: eine Querschnittsdarstellung eines erfindungsgemäßen elektrischen Steckverbinders im nicht verschraubten Zustand mit einer ersten Variante zur Verliersicherung für die Schraube,
- Fig. 2B: eine Querschnittsdarstellung eines erfindungsgemäßen elektrischen Steckverbinders im nicht verschraubten Zustand mit einer zweiten Variante zur Verliersicherung für die Schraube,
- Fig. 2C: eine Querschnittsdarstellung eines erfindungsgemäßen elektrischen Steckverbinders im nicht verschraubten Zustand mit einer dritten Variante zur Verliersicherung für die Schraube,
- Fig. 2D: eine Querschnittsdarstellung einer erfindungsgemäßen Steckverbindung aus dem erfindungsgemäßen elektrischen Steckverbinder und dem zugehörigen elektrischen Gegensteckverbinder im verschraubten Zustand,
- Fig. 3A,3B: eine isometrische Darstellung und eine Seitenansicht einer ersten Variante einer Feder und
- Fig. 3C,3D: eine isometrische Darstellung und eine Seitenansicht einer zweiten Variante einer Feder.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

### BESCHREIBUNG VON AUSFÜHRUNGSBEISPIELEN

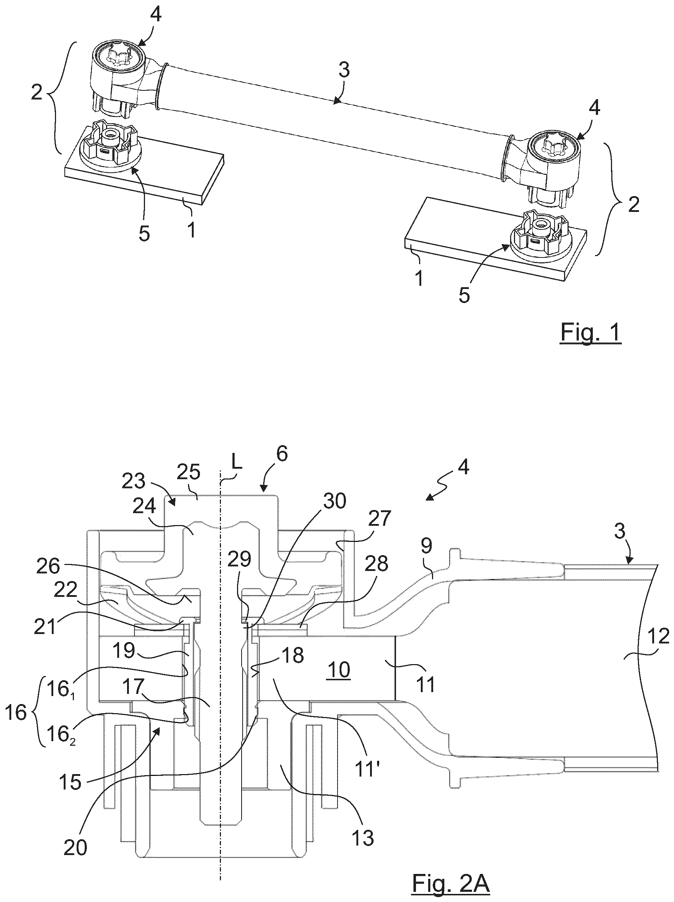

Aus Fig. 1 geht eine elektrische Verbindung zwischen zwei Batteriezellenmodulen 1 über zwei elektrische Steckverbindungen 2 und einem elektrischen Verbindungselement 3 hervor.

Die einzelne elektrische Steckverbindung 2 setzt sich aus einem elektrischen Steckverbinder 4 und einem zugehörigen elektrischen Gegensteckverbinder 5 zusammen. Die beiden elektrischen Steckverbinder 4, die in dieser Anwendung auch als elektrischen Batteriezellenmodulsteckverbinder bezeichnet werden können, sind jeweils mit einem unterschiedlichen axialen Ende des elektrischen Verbindungselements 3 elektrisch und mechanisch verbunden. Das elektrische Verbindungselement 3 ist in der Darstellung der Fig. 1 als ein elektrisches Kabel, insbesondere in dieser Anwendung als ein elektrisches Hochspannungskabel, ausgebildet. Alternativ kann als elektrisches Verbindungselement 3 auch eine Stromschiene zur Anwendung kommen. Der einzelne elektrische Gegensteckverbinder 5 ist jeweils mit einem elektrischen Kontakt des zugehörigen Batteriezellenmoduls 1 elektrisch und mechanisch verbunden.

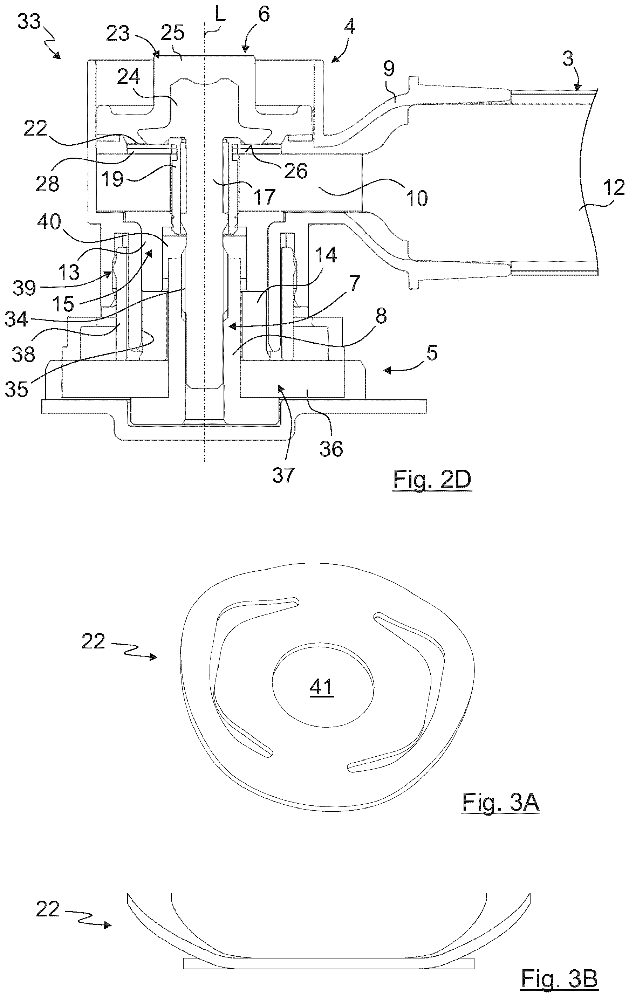

Der elektrische Steckverbinder 4 ist in der Querschnittsdarstellung der Fig. 2A in einem sogenannten Vormontagezustand dargestellt, in dem eine Schraube 6 in einem nicht verschraubten Zustand einer Schraubverbindung 7 (bezüglich der Schraubverbindung 7 siehe Fig. 2D) in den Steckverbinder 4 eingefügt und typischerweise verliersicher am Steckverbinder 5 fixiert ist. Im nicht verschraubten Zustand der Schraubverbindung 7 ist die Schraube 6 des Steckverbinders 4 mit der zugehörigen Schraubenmutter 8 des Gegensteckverbinders 5 nicht verschraubt (bezüglich der Schraubenmutter 8 siehe Fig. 2D).

Der Steckverbinder 4 weist ein elektrisch isolierendes Gehäuse 9 auf, in dem ein Kontaktelement 10 voll umschließend aufgenommen ist. Das elektrische isolierende Gehäuse 9 dient somit als Berührschutz für das Kontaktelement 10. Das Kontaktelement 10 ist in den einzelnen Darstellungen jeweils mit einer planaren Kontaktierungsfläche ausgebildet. Das Kontaktelement 10 weist einen Verbindungsbereich 11 auf, der vorzugsweise stoffschlüssig über beispielsweise eine Schweißverbindung mit dem elektrischen Leiter 12 des als ein elektrisches Kabel ausgebildeten elektrischen Verbindungselements 3 elektrisch und mechanisch verbunden ist. Das Kontaktelement 10 weist darüber hinaus einen Kontaktierungsbereich 11' auf, der sich vorzugsweise an den Verbindungsbereich 11 anschließt und mit einem weiteren Kontaktelement 13 elektrisch und mechanisch verbunden ist. Die elektrische und mechanische Verbindung zwischen dem Kontaktelement 10 und dem weiteren Kontaktelement 13 erfolgt typischerweise stoffschlüssig, kann aber auch kraftschlüssig sein. Das weitere Kontaktelement 13 ist vorzugsweise hülsenförmig ausgeformt und bildet eine Kontakthülse zum elektrischen und mechanischen Kontaktieren eines ebenfalls hülsenförmig ausgeformten weiteren Gegenkontaktelements 14 des Gegensteckverbinders 5 (bezüglich des weiteren Gegenkontaktelements 14 sei ebenfalls auf die Fig. 2D verwiesen). Das vorzugsweise flach ausgeformte Kontaktelement 10 und das vorzugsweise hülsenförmig ausgeformte weitere Kontaktelement 13 bilden eine Kontaktelementanordnung 15 des Steckverbinders 4.

Die Kontaktelementanordnung 15 weist eine Durchführung 16 auf, durch die der Schraubenschaft 17 der Schraube 6 im nicht verschraubten und im verschraubten Zustand der Schraubverbindung 7 hindurchgeführt ist. Die Durchführung 16 der Kontaktelementanordnung 15 setzt sich aus einer Durchführung 16₁ des vorzugsweise flach ausgebildeten Kontaktelements 10 und einer Durchführung 16₂ des vorzugsweise hülsenförmig ausgebildeten weiteren Kontaktelements 13 zusammen.

Um den metallischen Schraubenschaft 17 der Schraube 6 von der metallischen Kontaktelementanordnung 15 elektrisch isoliert zu beabstanden, ist in der Durchführung 16 zwischen dem Schraubenschaft 17 und der Innenwand 18 der Durchführung 16, 16₁ und/oder 16₂ jeweils ein elektrisch isolierendes Element 19 angeordnet, welches vorzugsweise hülsenförmig ausgeformt ist. Das elektrisch isolierende Element 19 ist, wie in den Figuren 2A bis 2D dargestellt ist, an der Kontaktelementanordnung 15 fixiert, indem an der Innenwand 18 der Durchführung 16₂ des weiteren Kontaktelements 13 Fixierkrallen 20 ausgebildet sind, die sich in das elektrisch isolierende Element 19 formschlüssig einkrallen. Alternativ oder ergänzend können auch am Kontaktelement 10 derartige Fixierkrallen 20 ausgebildet sein. Eine zusätzliche axiale Fixierung des elektrisch isolierenden Elements 19 in Richtung des Gegensteckverbinders 5 ist durch Ausbildung wenigstens eines außenseitigen Steges 21 am elektrisch isolierenden Element 19 verwirklicht, welcher sich jeweils wenigstens über ein Winkelsegment, vorzugsweise vollumfänglich, des vorzugsweise hülsenförmigen elektrisch isolierenden Elements 19 erstreckt und sich auf dem noch zu erläuternden elastischen Element 22 abstützt. Alternativ kann das elektrisch isolierende Element 19 auch am Schraubenschaft 17 der Schraube 6 fixiert sein.

Abgewandt zum Gegensteckverbinder 6 schließt sich in Richtung der Längsachse L der Schraube 6 an den Schraubenschaft 17 ein Schraubenkopf 23 der Schraube 6 an. Der Schraubenkopf 23 setzt sich aus einem metallischen Grundkörper 24 und einer elektrisch isolierenden Umhüllung 25 zusammen, welche in den Darstellungen jeweils als eine elektrisch isolierende Beschichtung des metallischen Grundkörpers 24 ausgebildet ist. Die elektrische isolierende Umhüllung 25 bedeckt den metallischen Grundkörper 24 des Schraubenkopfes 23 mit Ausnahme der zum metallischen Grundkörper 24 gehörigen Auflagefläche 26. Auf diese Weise realisiert die elektrisch isolierende Umhüllung 25 einen Berührschutz für alle aus dem Gehäuse 9 herausragenden Außenflächen des Schraubenkopfes 23.

Die Schraube 6 wird über eine Seitenöffnung 27 des Gehäuses 9 in den Steckverbinder 4 eingefügt, welche abgewandt zum Gegensteckverbinder 5 in Richtung der Längsachse L der Durchführung 16 der Kontaktelementanordnung 15 im Gehäuse 9 ausgebildet ist. Die Seitenöffnung 27, durch die die Schraube 6 in den Steckverbinder 4 eingefügt wird, ist domförmig, insbesondere domförmig in Richtung des Außenbereiches des Steckverbinders 4, ausgeformt. Der Außendurchmesser des Schraubenkopfes 23 der Schraube 6 entspricht im Wesentlichen dem Innendurchmesser der domförmig ausgebildeten Seitenöffnung 27 des Gehäuses 9. Außerdem ist der Schraubenkopf 23 am äußeren radialen Rand zylindrisch ausgebildet.

Zwischen dem Schraubenkopf 23 und dem Kontaktelement 10 ist ein elastisches Element 22 angeordnet, welches bevorzugt als Feder ausgebildet ist. Das elastische Element 22 stützt sich hierbei zwischen der elektrisch isolierenden Umhüllung 25 des Schraubenkopfes 23 und dem Kontaktelement 10 ab. Auf diese Weise wird die metallische Auflagefläche 26 des Schraubenkopfes 23 der Schraube 6 im nicht verschraubten Zustand der Schraubverbindung 7 vom metallischen Kontaktelement 10 beabstandet und die metallische Schraube 6 von einem lebensgefährdenden elektrischen Potenzial des metallischen Kontaktelements 10 getrennt. Da die Durchführung 16₁ des Kontaktelements 10 zum Ausgleich von Abstandstoleranzen zwischen den benachbarten Batteriezellenmodulen 1 vorzugsweise als eine Langlochbohrung ausgebildet sei kann und die Auflagefläche des Schraubenkopfes 23 auf dem Kontaktelement 10 somit reduziert ist, ist zwischen dem elastischen Element 22 und dem Kontaktelement 10 ein metallisches Zwischenelement 28 angeordnet. Das metallische Zwischenelement 28, an dem sich der Schraubenkopf 23 im verschraubten Zustand der Schraubanordnung 15 abstützt, kann vorzugsweise als eine metallische Scheibe ausgebildet sein, durch die der Schraubenschaft 17 hindurchgeführt ist.

Damit die Schraube 6 im vormontierten Zustand des Steckverbinders 4 verliersicher im Gehäuse 9 befestigt ist, ist an einer Innenwand des elektrisch isolierenden Elements 19 im Bereich des axialen Endes, das dem Gegensteckverbinder 4 abgewandt ist, ein innenseitiger Steg 29 ausgebildet. Am innenseitigen Steg 29 des elektrisch isolierenden Elements 19 schlägt eine stufenförmige oder stegförmige Ausformung 30 am Schraubenschaft 17 der Schraube 6 an und verhindert somit ein Herausfallen der Schraube 6 aus dem Gehäuse 9.

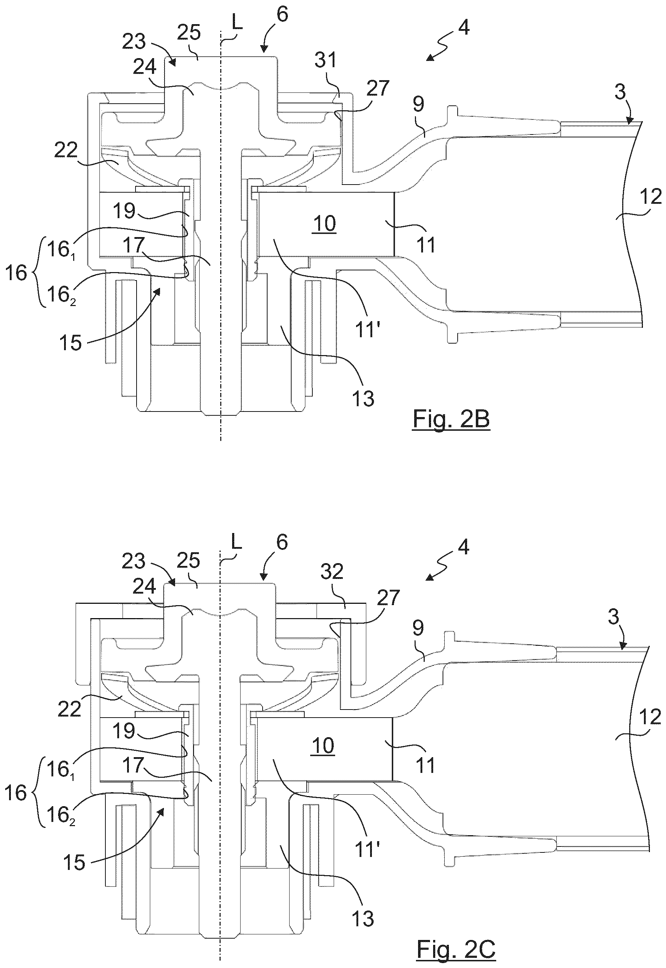

Eine weitere Variante zur verliersicher Befestigung der Schraube 6 im Gehäuse 9 ist in Fig. 2B dargestellt: in der domförmigen Seitenöffnung 27 des Gehäuses 9 ist ein Anschlagmittel 31 vorgesehen, welches vorzugsweise als wenigstens ein innenseitiger Steg ausgebildet ist, welches sich wenigstens entlang eines Winkelsegments, vorzugsweise vollumfänglich, der domförmigen Seitenöffnung 27 erstreckt. In einer dritten Variante einer Verliersicherung gemäß Fig. 2C ist die domförmige Seitenöffnung 27 mittels eines Abdeckmittels 32 wenigstens teilweise abgedeckt. Das Abdeckmittel 32, das ein Herausfallen der Schraube 6 verhindert, ist vorzugsweise kappenförmig ausgebildet und ist mittels einer Rast- oder Schraubverbindung an der domförmigen Seitenöffnung 27 befestigt.

In Fig. 2D ist eine elektrische Steckverbindung 33 aus einem elektrischen Steckverbinder 4 und einem zugehörigen elektrischen Gegensteckverbinder 5 im gesteckten und verschraubten Zustand dargestellt. Die Schraube 6 des Steckverbinders 4 ist hierbei mit der Schraubenmutter 8 des Gegensteckverbinders 5 verschraubt. Zur Verdeutlichung des verschraubten Zustandes der Schraubverbindung 7 ist in Fig. 2D das Außengewinde 34 am Schraubenschaft 17 der Schraube 6 dargestellt, das mit einem zugehörigen nicht dargestellten Innengewinde der Schraubenmutter 8 verschraubt ist.

In eine weitere Seitenöffnung 35 des Gehäuses 9 des Steckverbinders 4, welche in Richtung des Gegensteckverbinders 5 ausgebildet ist, ist das vorzugsweise hülsenförmig ausgebildete weitere Gegenkontaktelement 14 des Gegensteckverbinders 5 eingefügt und kontaktiert das vorzugsweise hülsenförmig ausgebildete weitere Kontaktelement 13 des Steckverbinders 4 stirnseitig. Das weitere Gegenkontaktelement 14 ist mit einem Gegenkontaktelement 36 des Gegensteckverbinders 5 vorzugsweise stoffschlüssig oder alternativ kraftschlüssig verbunden. Das Gegenkontaktelement 36 und das weitere Gegenkontaktelement 14 bilden eine Gegenkontaktelementanordnung 37 des Gegensteckverbinders 5. Das Gehäuse 38 des Gegensteckverbinders 5 ist vorzugsweise über eine Rastverbindung 39 mit dem Gehäuse 9 des Steckverbinders 4 befestigt.

Das vorzugsweise als Feder ausgebildete elastische Element 22 ist im verschraubten Zustand der Schraubverbindung 7 in axialer Richtung derart komprimiert, dass die Auflagefläche 26 des metallischen Grundkörpers 24 des Schraubenkopfes 23 mit dem Kontaktelement 10 des Steckverbinders 4 (im Fig. 2D mittelbar über das dazwischen angeordnete metallische elastische Element 22 und das metallische Zwischenelement 28) elektrisch und mechanisch verbunden ist. Somit ist eine mechanisch stabile Verschraubung, insbesondere eine mechanisch langzeitstabile Verschraubung, zwischen der Schraube 6 des Steckverbinders 4 und der Schraubenmutter 8 des Gegensteckverbinders 5 verwirklicht.

An einem axialen Ende der Schraubenmutter 8, die dem Steckverbinder 4 zugewandt ist, ist ein Berührschutzelement 40 auf der Schraubenmutter 8 vorgesehen, welches vorzugsweise ein kappenförmiges Element aus einem elektrisch isolierenden Material oder alternativ eine elektrisch isolierende Beschichtung auf der Stirnfläche der Schraubenmutter 8 ist.

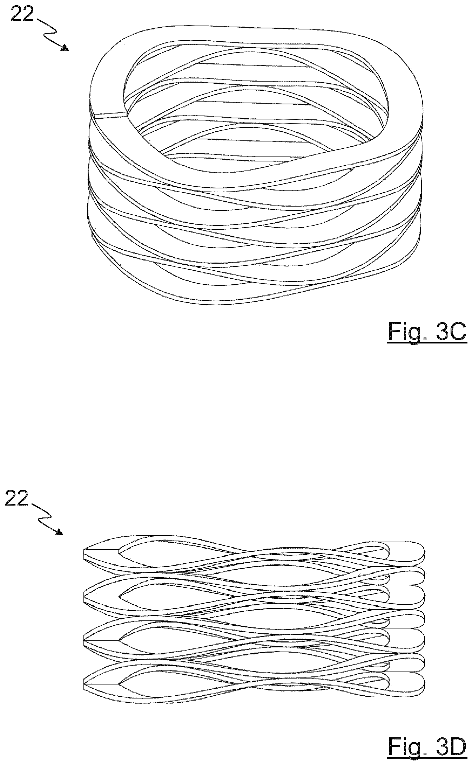

In der isometrischen Darstellung der Fig. 3A und in der Seitendarstellung der Fig. 3B ist das elastische Element 22 in einer Ausprägung als eine Feder, insbesondere als eine Wellfeder, dargestellt. Alternativ ist als mechanisches Element 22 auch eine Spiralfeder denkbar. Das als eine Wellfeder ausgebildete elastische Element 22 weist eine Durchführung 41 auf, durch die der Schraubenschaft 17 der Schraube 6 hindurchgeführt werden kann. Um ein elastisches Element 22 mit einer höheren Federhärte zu erzielen, ist in der isometrischen Darstellung der Fig. 3C und der Seitendarstellung der Fig. 3D ein elastisches Element 22 dargestellt, das aus mehreren miteinander verbundenen und gestapelten Einzelfedern, insbesondere aus mehreren miteinander verbundenen und gestapelten Wellfedern, zusammengesetzt ist.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

## Patentansprüche

1. Elektrischer Steckverbinder (4) zum elektrischen und mechanischen Verbinden mit einem zugehörigen elektrischen Gegensteckverbinder (5) aufweisend ein elektrisch isolierendes Gehäuse (9), eine Kontaktelementanordnung (15) und eine Schraube (6) zum Verschrauben mit einer Schraubenmutter (8) des Gegensteckverbinders (5), wobei in der Kontaktelementanordnung (15) eine Durchführung (16) ausgebildet ist, durch die ein Schraubenschaft (17) der Schraube (6) hindurchgeführt ist, wobei der Schraubenschaft (17) von einer Innenwand (18) der Durchführung (16) elektrisch isoliert angeordnet ist, wobei zwischen einem Schraubenkopf (23) der Schraube (6) und der Kontaktelementanordnung (15) ein elastisches Element (22) angeordnet ist, welches in einem nicht verschraubten Zustand der Schraube (6) und der Schraubenmutter (8) eine Auflagefläche (26) des Schraubenkopfes (23) von der Kontaktelementanordnung (15) beabstandet und in einem verschraubten Zustand der Schraube (6) und der Schraubenmutter (8) derart gestaucht ist, dass die Auflagefläche (26) mit der Kontaktelementanordnung (15) elektrisch und mechanisch verbunden ist.

2. Elektrischer Steckverbinder (4) nach Patentanspruch 1,
**dadurch gekennzeichnet,**
**dass** zwischen dem Schraubenschaft (17) und der Innenwand (18) ein elektrisch isolierendes Element (19) angeordnet ist, welches vorzugsweise hülsenförmig ausgebildet ist, wobei das elektrisch isolierende Element (19) am Schraubenschaft (17) und/oder an der Kontaktelementanordnung (15) befestigt ist.

3. Elektrischer Steckverbinder (4) nach Patentanspruch 1 oder 2,
**dadurch gekennzeichnet,**
**dass** das elastische Element (22) als eine Feder ausgebildet ist, welche den Schraubenschaft (17) wenigstens in einem Winkelsegment, vorzugsweise vollumfänglich, umgibt.

4. Elektrischer Steckverbinder (4) nach Patentanspruch 3,
**dadurch gekennzeichnet,**
**dass** die Feder mehrere aufeinander gestapelte Einzelfedern aufweist, welche vorzugsweise eine Hülse ergeben, in deren Mantel mehrere durch jeweils eine Strebe voneinander getrennte Durchführungen, beispielsweise wabenförmige, quaderförmige, trapezförmige, polygonförmige, elliptische und/oder runde Durchführungen, ausgebildet sind.

5. Elektrischer Steckverbinder (4) nach einem der Patentansprüche 1 bis 4,
**dadurch gekennzeichnet,**
**dass** der Schraubenkopf (23) einen metallischen Grundkörper (24) und eine elektrisch isolierende Umhüllung (25), vorzugsweise eine elektrisch isolierende Beschichtung, aufweist, welche den metallischen Grundkörper (24) außer in der Auflagefläche (26) umgibt, wobei sich das elastische Element (22) an der elektrisch isolierenden Umhüllung (25), vorzugsweise einzig an der elektrisch isolierenden Umhüllung (25), abstützt.

6. Elektrischer Steckverbinder (4) nach einem der Patentansprüche 1 bis 5,
**dadurch gekennzeichnet,**
**dass** zwischen dem elastischen Element (22) und der Kontaktelementanordnung (15) ein metallisches Zwischenelement (28), vorzugsweise eine metallische Scheibe, angeordnet ist, an dem sich die Auflagefläche (26) abstützt.

7. Elektrischer Steckverbinder (4) nach einem der Patentansprüche 1 bis 6,
**dadurch gekennzeichnet,**
**dass** in einer Längsachsrichtung der Durchführung (16) im Gehäuse (9) eine dem Gegensteckverbinder (5) abgewandte Seitenöffnung (27) zum Einfügen der Schraube (6) in den Steckverbinder (4) ausgebildet ist, welche domförmig ausgeformt ist, wobei ein Innendurchmesser der Seitenöffnung (27) im Wesentlichen einem Außendurchmesser des Schraubenkopfes (23) entspricht, so dass die Schraube (6) in der Längsachsrichtung der Durchführung (16) geführt ist.

8. Elektrischer Steckverbinder (4) nach Patentanspruch 7,
**dadurch gekennzeichnet,**
**dass** zur verliersicheren Befestigung der Schraube (6) am Steckverbinder (4):
i) in der domförmig ausgeformten Seitenöffnung (27) ein Anschlagmittel (31) ausgebildet ist oder
ii) die domförmig ausgeformte Seitenöffnung (27) zumindest teilweise durch ein Abdeckmittel (32) abgedeckt ist, welches an der domförmig ausgeformten Seitenöffnung (27) befestigt ist.

9. Elektrischer Steckverbinder (4) nach einem der Patentansprüche 1 bis 8,
**dadurch gekennzeichnet,**
**dass** die Kontaktelementanordnung (15) ein Kontaktelement (10) aufweist, das eingerichtet ist, unmittelbar mit einem elektrischen Verbindungselement (3) außerhalb einer Steckschnittstelle des Steckverbinders (4) elektrisch und mechanisch verbindbar zu sein, wobei zwischen dem Kontaktelement (10) und dem Schraubkopf (23) das elastische Element (22) angeordnet ist, wobei im nicht verschraubten Zustand die Auflagefläche (26) vom Kontaktelement (10) beabstandet ist, wobei im verschraubten Zustand die Auflagefläche (27) mit dem Kontaktelement elektrisch und mechanisch verbunden ist.

10. Elektrischer Steckverbinder (4) nach Patentanspruch 9,
**dadurch gekennzeichnet,**
**dass** die Kontaktelementanordnung (15) ein weiteres Kontaktelement (13) aufweist, welches mit dem Kontaktelement (10) elektrisch und mechanisch kontaktierbar ist und eingerichtet ist, mit einer Gegenkontaktelementanordnung (37) des Gegensteckverbinders (5) elektrisch und mechanisch verbindbar zu sein, und wobei der Steckverbinder (4) ein weiteres elastisches Element, vorzugsweise eine weitere Feder, aufweist, welches zwischen dem Schraubkopf (23) und dem weiteren Kontaktelement (13) angeordnet ist.

11. Elektrischer Steckverbinder (4) nach Patentanspruch 10,
**dadurch gekennzeichnet,**
**dass** das weitere elastische Element in einem nicht verschraubten Zustand der Schraube (6) und der Schraubenmutter (8) das Kontaktelement (10) vom weiteren Kontaktelement (13) beabstandet und in einem verschraubten Zustand der Schraube (6) und der Schraubenmutter (8) derart gestaucht ist, dass das Kontaktelement (10) das weitere Kontaktelement (13) kontaktiert.

12. Elektrischer Steckverbinder (4) nach Patentanspruch 10 oder 11,
**dadurch gekennzeichnet,**
**dass** das elektrisch isolierende Element (19) am weiteren Kontaktelement (13) fixiert ist,

13. Elektrischer Steckverbinder (4) nach einem der Patentansprüche 1 bis 12,
**dadurch gekennzeichnet,**
**dass** der Steckverbinder (4) vorzugsweise als ein Hochstromsteckverbinder, besonders vorzugsweise als ein Batteriezellenmodulsteckverbinder zum elektrischen und mechanischen Verbinden mit einem Batteriezellenmodulgegensteckverbinder eines Batteriezellenmoduls einer elektrischen Batterie, ausgebildet ist.

14. Elektrische Steckverbindung (33) aufweisend einen elektrischen Steckverbinder (4) gemäß einem der Patentansprüche 1 bis 13 und den zugehörigen elektrischen Gegensteckverbinder (5).

## Geänderte Patentansprüche

### Geänderte Patentansprüche gemäss Regel 137(2) EPÜ.

1. Elektrischer Steckverbinder (4) zum elektrischen und mechanischen Verbinden mit einem zugehörigen elektrischen Gegensteckverbinder (5) aufweisend ein elektrisch isolierendes Gehäuse (9), eine Kontaktelementanordnung (15) und eine Schraube (6) zum Verschrauben mit einer Schraubenmutter (8) des Gegensteckverbinders (5), wobei in der Kontaktelementanordnung (15) eine Durchführung (16) ausgebildet ist, durch die ein Schraubenschaft (17) der Schraube (6) hindurchgeführt ist,
**dadurch gekennzeichnet,**
**dass** der Schraubenschaft (17) von einer Innenwand (18) der Durchführung (16) elektrisch isoliert angeordnet ist, wobei zwischen einem Schraubenkopf (23) der Schraube (6) und der Kontaktelementanordnung (15) ein elastisches Element (22) angeordnet ist, welches in einem nicht verschraubten Zustand der Schraube (6) und der Schraubenmutter (8) eine Auflagefläche (26) des Schraubenkopfes (23) von der Kontaktelementanordnung (15) beabstandet und in einem verschraubten Zustand der Schraube (6) und der Schraubenmutter (8) derart gestaucht ist, dass die Auflagefläche (26) mit der Kontaktelementanordnung (15) elektrisch und mechanisch verbunden ist.

2. Elektrischer Steckverbinder (4) nach Patentanspruch 1,
**dadurch gekennzeichnet,**
**dass** zwischen dem Schraubenschaft (17) und der Innenwand (18) ein elektrisch isolierendes Element (19) angeordnet ist, welches vorzugsweise hülsenförmig ausgebildet ist, wobei das elektrisch isolierende Element (19) am Schraubenschaft (17) und/oder an der Kontaktelementanordnung (15) befestigt ist.

3. Elektrischer Steckverbinder (4) nach Patentanspruch 1 oder 2,
**dadurch gekennzeichnet,**
**dass** das elastische Element (22) als eine Feder ausgebildet ist, welche den Schraubenschaft (17) wenigstens in einem Winkelsegment, vorzugsweise vollumfänglich, umgibt.

4. Elektrischer Steckverbinder (4) nach Patentanspruch 3,
**dadurch gekennzeichnet,**
**dass** die Feder mehrere aufeinander gestapelte Einzelfedern aufweist, welche vorzugsweise eine Hülse ergeben, in deren Mantel mehrere durch jeweils eine Strebe voneinander getrennte Durchführungen, beispielsweise wabenförmige, quaderförmige, trapezförmige, polygonförmige, elliptische und/oder runde Durchführungen, ausgebildet sind.

5. Elektrischer Steckverbinder (4) nach einem der Patentansprüche 1 bis 4,
**dadurch gekennzeichnet,**
**dass** der Schraubenkopf (23) einen metallischen Grundkörper (24) und eine elektrisch isolierende Umhüllung (25), vorzugsweise eine elektrisch isolierende Beschichtung, aufweist, welche den metallischen Grundkörper (24) außer in der Auflagefläche (26) umgibt, wobei sich das elastische Element (22) an der elektrisch isolierenden Umhüllung (25), vorzugsweise einzig an der elektrisch isolierenden Umhüllung (25), abstützt.

6. Elektrischer Steckverbinder (4) nach einem der Patentansprüche 1 bis 5,
**dadurch gekennzeichnet,**
**dass** zwischen dem elastischen Element (22) und der Kontaktelementanordnung (15) ein metallisches Zwischenelement (28), vorzugsweise eine metallische Scheibe, angeordnet ist, an dem sich die Auflagefläche (26) abstützt.

7. Elektrischer Steckverbinder (4) nach einem der Patentansprüche 1 bis 6,
**dadurch gekennzeichnet,**
**dass** in einer Längsachsrichtung der Durchführung (16) im Gehäuse (9) eine dem Gegensteckverbinder (5) abgewandte Seitenöffnung (27) zum Einfügen der Schraube (6) in den Steckverbinder (4) ausgebildet ist, welche domförmig ausgeformt ist, wobei ein Innendurchmesser der Seitenöffnung (27) im Wesentlichen einem Außendurchmesser des Schraubenkopfes (23) entspricht, so dass die Schraube (6) in der Längsachsrichtung der Durchführung (16) geführt ist.

8. Elektrischer Steckverbinder (4) nach Patentanspruch 7, **dadurch gekennzeichnet,**
**dass** zur verliersicheren Befestigung der Schraube (6) am Steckverbinder (4):
i) in der domförmig ausgeformten Seitenöffnung (27) ein Anschlagmittel (31) ausgebildet ist oder
ii) die domförmig ausgeformte Seitenöffnung (27) zumindest teilweise durch ein Abdeckmittel (32) abgedeckt ist, welches an der domförmig ausgeformten Seitenöffnung (27) befestigt ist.

9. Elektrischer Steckverbinder (4) nach einem der Patentansprüche 1 bis 8,
**dadurch gekennzeichnet,**
**dass** die Kontaktelementanordnung (15) ein Kontaktelement (10) aufweist, das eingerichtet ist, unmittelbar mit einem elektrischen Verbindungselement (3) außerhalb einer Steckschnittstelle des Steckverbinders (4) elektrisch und mechanisch verbindbar zu sein, wobei zwischen dem Kontaktelement (10) und dem Schraubkopf (23) das elastische Element (22) angeordnet ist, wobei im nicht verschraubten Zustand die Auflagefläche (26) vom Kontaktelement (10) beabstandet ist, wobei im verschraubten Zustand die Auflagefläche (27) mit dem Kontaktelement elektrisch und mechanisch verbunden ist.

10. Elektrischer Steckverbinder (4) nach Patentanspruch 9,
**dadurch gekennzeichnet,**
**dass** die Kontaktelementanordnung (15) ein weiteres Kontaktelement (13) aufweist, welches mit dem Kontaktelement (10) elektrisch und mechanisch kontaktierbar ist und eingerichtet ist, mit einer Gegenkontaktelementanordnung (37) des Gegensteckverbinders (5) elektrisch und mechanisch verbindbar zu sein, und wobei der Steckverbinder (4) ein weiteres elastisches Element, vorzugsweise eine weitere Feder, aufweist, welches zwischen dem Schraubkopf (23) und dem weiteren Kontaktelement (13) angeordnet ist.

11. Elektrischer Steckverbinder (4) nach Patentanspruch 10,
**dadurch gekennzeichnet,**
**dass** das weitere elastische Element in einem nicht verschraubten Zustand der Schraube (6) und der Schraubenmutter (8) das Kontaktelement (10) vom weiteren Kontaktelement (13) beabstandet und in einem verschraubten Zustand der Schraube (6) und der Schraubenmutter (8) derart gestaucht ist, dass das Kontaktelement (10) das weitere Kontaktelement (13) kontaktiert.

12. Elektrischer Steckverbinder (4) nach Patentanspruch 10 oder 11,
**dadurch gekennzeichnet,**
**dass** das elektrisch isolierende Element (19) am weiteren Kontaktelement (13) fixiert ist,

13. Elektrischer Steckverbinder (4) nach einem der Patentansprüche 1 bis 12,
**dadurch gekennzeichnet,**
**dass** der Steckverbinder (4) vorzugsweise als ein Hochstromsteckverbinder, besonders vorzugsweise als ein Batteriezellenmodulsteckverbinder zum elektrischen und mechanischen Verbinden mit einem Batteriezellenmodulgegensteckverbinder eines Batteriezellenmoduls einer elektrischen Batterie, ausgebildet ist.

14. Elektrische Steckverbindung (33) aufweisend einen elektrischen Steckverbinder (4) gemäß einem der Patentansprüche 1 bis 13 und den zugehörigen elektrischen Gegensteckverbinder (5).
